# EUROPEAN PATENT APPLICATION

(11) **EP 3 115 847 A1**
(43) Date of publication of application: **11.01.2017**
(21) Application number: 16176968.2
(22) Date of filing: 29.06.2016
(51) Int. Cl.: G03G 15/00

(54) **IMAGE FORMING APPARATUS WITH PASSIVE SENSOR**

(30) Priority: 10.07.2015 JP 2015138784
(71) Applicant: Ricoh Company, Ltd., Tokyo 143-8555 (JP)
(72) Inventor: ISHIMITSU, HIROKI, Tokyo, 143-8555 (JP)
(74) Representative: Leeming, John Gerard

(57) **Abstract**

An image forming apparatus (2) includes a frame (4); an external cover (18) to cover an external face of the frame (4); and a passive sensor (20) including a pyroelectric element. The pyroelectric element includes a light receiving part (20a) to detect infrared rays; and a signal output part (20b) to emit output signals based on the infrared rays detected by the light receiving part (20a), in which the passive sensor (20) is mounted to the external cover (18) with the light receiving part (20a) exposed outside the external cover (18).

## Description

### BACKGROUND

### Technical Field

Exemplary embodiments of the present invention relate to an image forming apparatus with a passive sensor to detect the approach of a user.

### Background Art

To accelerate wake-up from a standby state of an image forming apparatus, the image forming apparatus has a human body sensor or a passive sensor disposed on the image forming apparatus frame, so that a user is detected before commencing operation, and wake-up is started upon receipt of the detected signal.

The passive sensor is composed of an infrared sensor to detect infrared rays of a specific wavelength emitted from the human body, and emits a predetermined signal upon detecting the infrared rays, so that the image forming apparatus detects the user approaching the apparatus.

As disclosed in JP2013-07980-A, the passive sensor is disposed inside an external cover of a frame of the image forming apparatus and detects a user via a slit formed on the external cover.

However, in the method of detecting the user via the slit formed on the external cover, a detection range of the passive sensor greatly depends on a position, a width, and a largeness of the slit. Accordingly, not only a precision in the position of the slit in the external cover, the precision in mounting the external cover relative to the frame of the image forming apparatus may adversely affect the detection precision of the passive sensor.

Considering the outstanding status, regardless of the precision in mounting the external cover, provision of the image forming apparatus capable of obtaining the detection range of the passive sensor with high precision is an objective of the present invention.

### SUMMARY

In one embodiment of the disclosure, provided is an image forming apparatus including a frame; an external cover to cover an external face of the frame; and a passive sensor including a pyroelectric element. The pyroelectric element includes a light receiving part to detect infrared rays; and a signal output part to emit output signals based on the infrared rays detected by the light receiving part, in which the passive sensor is mounted to the external cover with the light receiving part exposed outside the external cover.

According to at least one embodiment of the present invention, regardless of the precision in mounting the external cover, the detection range of the passive sensor can be obtained with high precision.

These and other features and advantages of the present invention will become apparent upon consideration of the following description of the preferred embodiments of the present invention when taken in conjunction with the accompanying drawings.

### BRIEF DESCRIPTION OF THE DRAWINGS

FIG. 1 is a cross-sectional view of a copier as one type of image forming apparatus according to a first embodiment of the present invention;
FIG. 2 schematically illustrates a conventional slit-type sensor;
FIGS. 3A and 3B illustrate an external cover on which a passive sensor is disposed, in which FIG. 3A illustrates an external view and FIG. 3B illustrates an internal view;
FIG. 4 is a exploded perspective view illustrating a mounting configuration of the passive sensor inside the external cover;
FIGS. 5A and 5B are enlarged views of a sensor holder viewed from an outside of the external cover, in which FIG. 5A illustrates the passive sensor not disposed on the external frame of the image forming apparatus, and FIG. 5B illustrates the passive sensor set on the external frame of the image forming apparatus;
FIG. 6 illustrates a structure including a light receiving part that protrudes from the external cover; and
FIG. 7 illustrates a mounting configuration of the passive sensor viewed from an inside of the external cover according to a second embodiment of the present invention.

### DETAILED DESCRIPTION

Hereinafter, embodiments of the present invention will be described with reference to the accompanying drawings.

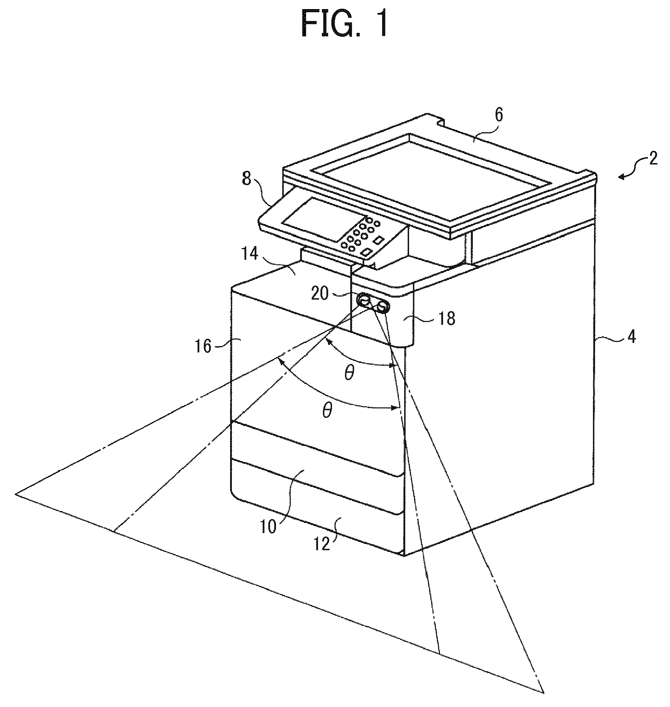

FIGS. 1 to 6 illustrate a first embodiment. FIG. 1 illustrates an external view of a copier 2 as an image forming apparatus according to the first embodiment of the present invention. The copier 2 includes a frame 4, an openably closable pressing plate 6 disposed on an upper surface of the apparatus frame 4, a control panel 8, and sheet cassettes 10 and 12 disposed on a lower portion of the frame 4. Reference numeral 14 denotes a space for a sheet ejection tray.

Image forming structure inside the frame 4 is identical to a conventional one. Specifically, after a surface of a photoconductor drum as an image bearer is uniformly charged by a charger, an electrostatic image is formed on the photoconductor drum by an exposure device based on image information, the electrostatic image is rendered visible as a toner image by a developing device, and the toner image is precisely transferred from the photoconductor drum to a recording medium. The toner image transferred to the recording medium is fixed by a fixing device, and the recording medium is ejected onto a sheet ejection tray space 14. An external surface of the frame 4 is covered by a plurality of external covers 16 and 18. Passive sensors 20 each as a passive sensor is disposed inside the external frame, and a part to detect infrared rays of the passive is so disposed as to be exposed to outside the frame of the apparatus.

To save power of the image forming apparatus, the image forming apparatus is normally left in a standby state when the apparatus is not used, in which less power is consumed than the state in which the apparatus is used. For example, a not-used state reaches a predetermined time period, the state automatically transitions to a standby mode. Specifically, the operation mode of the apparatus transitions from an image formation mode to the standby mode. Recently, due to an increase in applications used in the image forming apparatus, a longer time is required to wake up the controller. Then, the passive sensor detects an approach of a user to the image forming apparatus, thereby lessening the wake up time from the standby time as much as possible.

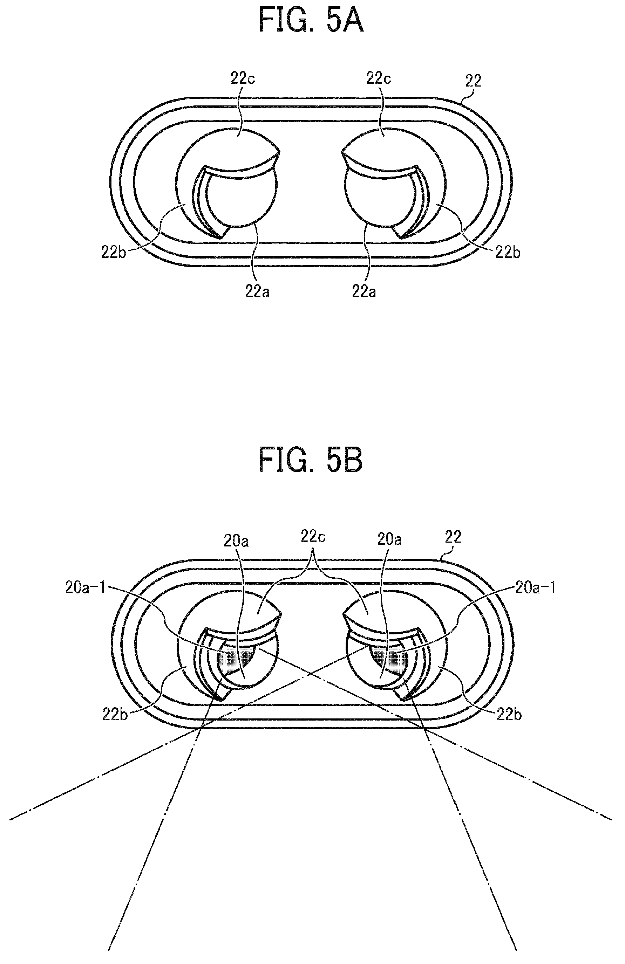

Two passive sensors 20 are positioned near the front control panel 8 at a control side of the frame 4. Each of two sensors 20 includes a light receiving part, of which incident angle (or a viewing angle θ) is different from each other, is oriented obliquely downward and facing each other. More specifically, as in FIG. 5B, compared to a case in which only one passive sensor 20 is used, an entire viewing angle widens. In addition, because each viewing angle is oriented to an inner side, a space to secure the viewing angle is shared, to thereby save the space. Further, the passive sensor 20 positioned at a higher position of the frame 4 can detect a user approaching from far. When the user operates the image forming apparatus, the user in general has an access to the control panel 8, so that provision of the passive sensor 20 in the vicinity of the height of the control panel 8 allows a wider detection distance from the frame 4 and a precise detection of the user who operates the image forming apparatus.

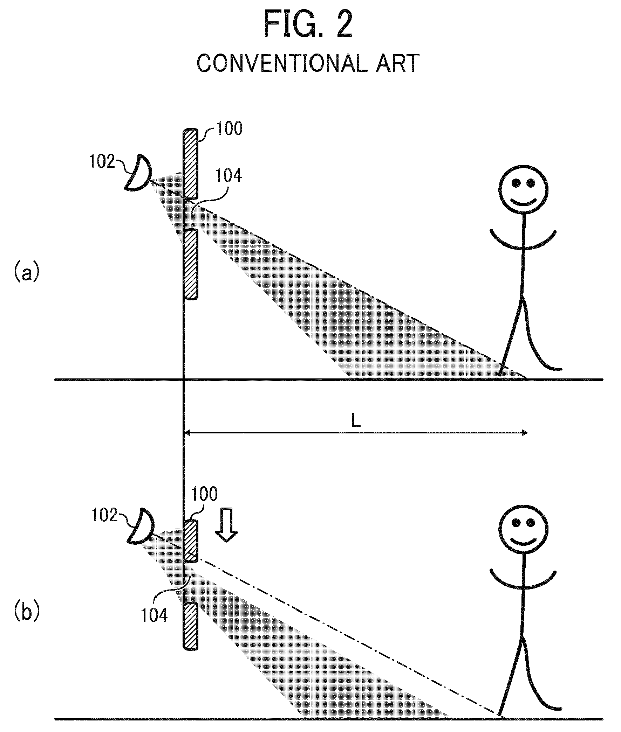

FIG. 2 illustrates that precision in the detection of the passive sensor depends on a size or positional precision of a slit adopted in a conventional type of sensor. In a conventional arrangement, a passive sensor 102 is disposed on an inner side of a sensor cover 100. The passive sensor 102 is separated from a corresponding slit 104 by a predetermined distance, formed in the sensor cover 100. A detection range of the passive sensor 102 is defined by the position and open width of the slit 104. In (a) of FIG. 2, because the slit 104 is positioned at a proper position, a required detection distance L can be secured.

However, when the slit 104 is not properly positioned relative to the sensor cover 100, and due to the precision in assembly of the sensor cover 100 relative to the external cover 18, the position of the slit 104 is lower than a target position as illustrated in (b) of FIG. 2. In this case, the required detection distance L is not secured and the apparatus does not wake up unless the user approaches sufficiently close to the frame 4. FIG. 2 illustrates a failure in the detection range in the vertical direction; however, the horizontal detection range to detect the user also narrows due to the position of the slit and the precision in mounting the sensor cover.

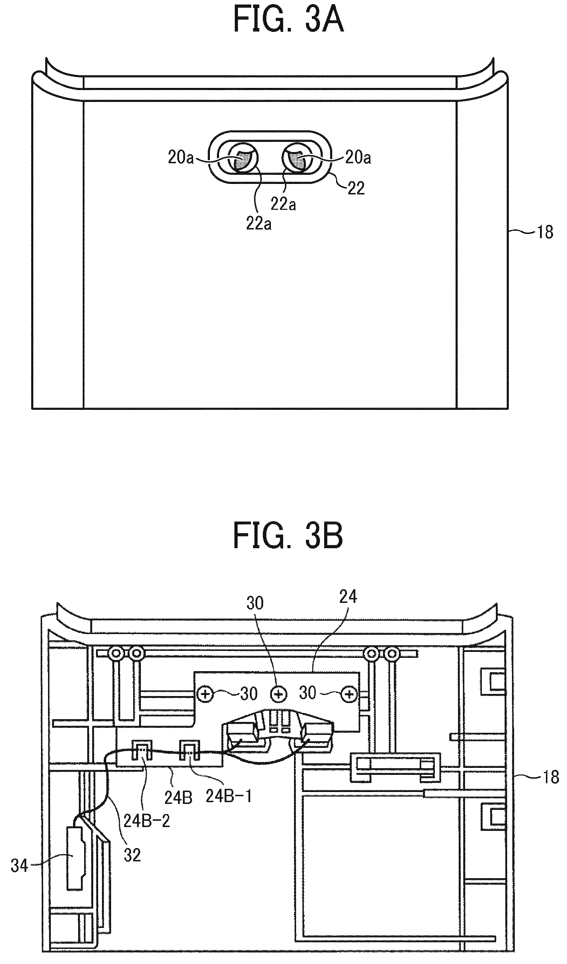

To solve this problem, in the present embodiment, the passive sensor 20 is directly disposed on the external cover 18, and the light receiving part to detect the infrared rays from the passive is exposed outside the external cover 18. Specifically, by eliminating defining the detection range with use of the slit, the light receiving part alone is exposed outside the frame, thereby preventing an external view of the apparatus from deteriorating and precision in assembly from being adversely affected. As illustrated in FIG. 3A, a sensor holder 22 is integrated into the external cover 18. The sensor holder 22 includes two passive sensors 20 each including the light receiving part 20a, and two holes 22a into each of which the light receiving part 20a is engaged. Two passive sensors 20 are assembled from an inner side of the sensor holder 22, and each semispherical light receiving part 20a is inserted into the hole 22a and protrudes outward from the hole 22a.

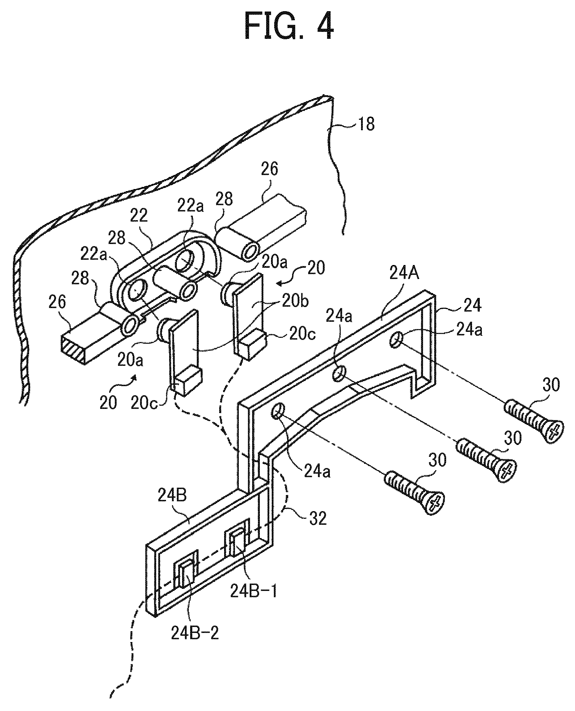

The passive sensor 20 includes pyroelectric elements to emit an output signal depending on a variation in the amount of the incident infrared rays. Specifically, as illustrated in FIG. 4, each passive sensor 20 includes the light receiving part 20a to detect infrared rays of a specific wavelength emitted from a passive; a signal output part 20b, and a connector 20c. The light receiving part 20a includes a filter to allow only infrared rays of the specific wavelength to pass therethrough. Each of the passive sensors 20 is assembled from an inner side of the sensor holder 22, each of the two light receiving parts 20a is engaged to each hole 22a, so that only the two light receiving parts 20a having a semispherical shape protrude toward outside the external cover, a frame on which the light receiving part 20a is secured contacts a periphery of the hole 22a to thus define a protrusion amount of the light receiving part 20a. Thus, the passive sensor 20 is precisely positioned relative to the external cover 18.

With this state, a pressing member 24 is contacted against a rear side of the passive sensors 20 and is secured thereto by screwing screws 30 into female screws 28 disposed on a rib 26 formed on an inner wall or face of the external cover 18. By fastening the pressing member 24, the passive sensors 20 are sandwiched and secured between the external cover 18 and the pressing member 24. Reference numerals 24a denote screw insertion holes. In the present embodiment, a peripheral edge portion of the pressing member 24 is formed as a protruded wall or flange toward the screws 30; however, the flange may be disposed on an opposite side toward the external cover 18 to provide a pressing function.

The pressing member 24 includes a main body 24A and a wire harness guide 24B that is integrated into the main body 24A. The wire harness guide 24B includes guide pieces 24B-1 and 24B-2, which are formed integrally with the wire harness guide 24B. A wire harness 32 extending from the connector 20c is held by the guide pieces 24B-1 and 24B-2, thereby safely holding the wire harness 32 snugly.

When the passive sensor 20 is directly mounted to the external cover 18, a controller of the frame 4 and the passive sensor 20 need be connected via a wire harness, so that output signals from the human who approaches are transmitted to the frame 4 to thereby wake up the apparatus. Because the external cover 18 is mounted to the frame 4, the wire harness 32 needs to be held to the frame 4 without any slack to improve workability. Thus, a member to guide the wire harness 32 is necessary. Because the guide pieces 24B-1 and 24B-2 to guide the wire harness 32 are disposed integrally with the pressing member 24, the number of constituent parts is reduced and assembly is simplified.

FIG. 3B illustrates a state in which the passive sensors 20 are pressed by the pressing member 24 and are secured, viewed from an inner side of the external cover 18. A plurality of ribs extending vertically and horizontally is formed on an inner wall of the external cover 18. A connector 34 of a side of the apparatus is disposed on an inner side of the external cover 18 and the wire harness 32 is connected to the other end of the connector 34. A signal line with the controller to control wake-up is connected to the other end of the connector 34.

As described above, the passive sensor 20 is sandwiched and secured between the external cover 18 and the pressing member 24. When the passive sensor 20 is held with a predetermined angle so that the light receiving part 20a is oriented obliquely downward, screw holes with a predetermined angle may be required. However, due to the above tucking structure, no angled screw hole is necessary. Even though a largeness or strength for the passive sensor 20 to be screwed and secured to the external cover lacks, the above tucking structure easily secures the passive sensor 20 to the external cover 18.

FIG. 5A illustrates the sensor holder 22 before the passive sensor 20 is installed, viewed from an outside of the external cover 18. Each light-blocking shield 22b to define a viewing angle of the semispherical light receiving part 20a is formed outside the sensor holder 22. A light-blocking top cover 22c to cover an upper part of the light receiving part 20a is formed integrally with the shield 22b. Each light receiving part 20a includes a light receiving face 20a-1. Incident infrared rays from outside a predetermined viewing angle are blocked and an incidence of the infrared rays from above is blocked by the top cover 22c.

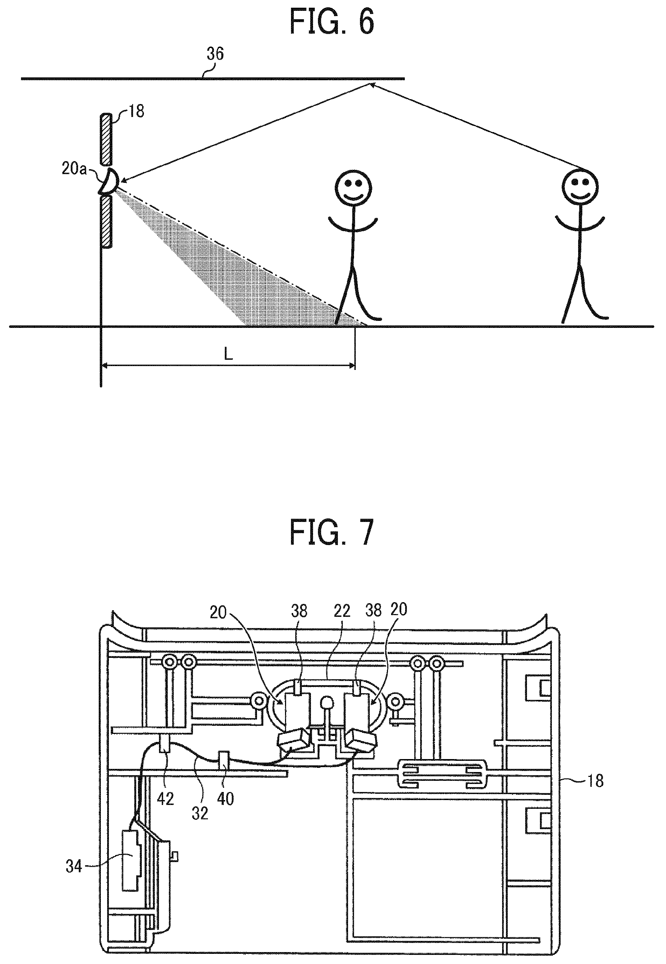

As illustrated in FIG. 6, when the light receiving part 20a is directly mounted to the external cover in a state in which the upper part of the light receiving face 20a-1 is not covered, the detection range of the passive sensor 20 includes a range toward a ceiling 36. Even in this case, there is no problem when the ceiling 36 has enough height. However, when the ceiling is low, the infrared rays emitted from the passive are reflected by the ceiling, the reflected infrared rays are incident to the light receiving face 20a-1, and the passive sensor 20 reacts to a human existing at a farther position than designed to handle. By providing the top cover 22c, the incidence of the reflected infrared rays from the ceiling can be blocked, and the passive sensor 20 detects only the user who approached to use the image forming apparatus. That is, erroneous detection can be prevented with a not-complicated structure.

FIG. 7 illustrates the passive sensor 20 according to a second embodiment. Same reference numerals are applied to the same parts described in the above embodiments, and a detailed description on the same structure and function is appropriately omitted. In the above embodiment, the pressing member 24 is secured by screws and the passive sensor 20 is clamped. In the second embodiment, a projected or claw-shaped pressing member 38 is integrally formed inside the external cover 18 and a frame of the passive sensor 20 is interposed in a gap between the pressing member 38 and the external cover 18. Guide pieces 40 and 42 to guide the wire harness 32 are integrally formed inside the external cover 18. As a result, a number of parts can be reduced compared to a case in which the pressing member and guide pieces are separately formed.

Alternatively, the edge of the pressing member 24 is engaged with a plurality of projections formed on the external cover 18 and the passive sensor 20 can be secured using an elastic deformation of the pressing member 24.

## Claims

1. An image forming apparatus (2) comprising:
a frame (4);
an external cover (18) to cover an external face of the frame (4); and
a passive sensor (20) including a pyroelectric element,
the pyroelectric element including:
a light receiving part (20a) to detect infrared rays; and
a signal output part (20b) to emit output signals based on the infrared rays detected by the light receiving part (20a),
wherein the passive sensor (20) is mounted to the external cover (18) with the light receiving part (20a) exposed outside the external cover (18).

2. The image forming apparatus (2) according to claim 1, wherein the passive sensor (20) includes a top cover (22c) to cover an upper part of the light receiving part (20a) to detect the infrared rays.

3. The image forming apparatus (2) according to claim 1 or 2, further comprising another passive sensor (20),
wherein the light receiving part (20a) of the passive sensor (20) and a light receiving part (20a) of said another passive sensor (20) are oriented obliquely downward and disposed facing each other.

4. The image forming apparatus (2) according to any one of claims 1 to 3, further comprising a pressing member (24) disposed at an inner side of the external cover (18),
wherein the light receiving part (20a) is inserted into a hole of the external cover (18) from the inner side of the external cover (18), so that the passive sensor (20) is sandwiched and secured between the external cover (18) and the pressing member (24, 38).

5. The image forming apparatus (2) according to claim 4, further comprising a wire harness (32) for the passive sensor (20),
wherein the pressing member (24) is configured to guide the wire harness (32).

6. The image forming apparatus (2) according to any one of claims 1 to 3, further comprising a pressing member (24) disposed at an inner side of the external cover (18),
wherein the light receiving part (20a) is inserted into a hole (22a) of the external cover (18) from the inner side of the external cover (18), so that the passive sensor (20) is held and secured by the pressing member (24, 38).

7. The image forming apparatus (2) according to claim 6, further comprising a wire harness (32) for the passive sensor (20),
wherein the external cover (18) is configured to guide the wire harness (32).
